# EUROPEAN PATENT APPLICATION

(11) **EP 2 637 418 A1**
(43) Date of publication of application: **11.09.2013**
(21) Application number: 11837696.1
(22) Date of filing: 09.09.2011
(51) Int. Cl.: H04R 3/00, G01S 7/521, H04R 1/02, H04R 17/00

(54) **OSCILLATOR AND PORTABLE DEVICE**

(30) Priority: 01.11.2010 JP 2010245665
(71) Applicant: NEC Corporation, Tokyo 108-8001 (JP)
(72) Inventor: ONISHI, Yasuharu, Tokyo 108-8001 (JP); KURODA, Jun, Tokyo 108-8001 (JP); KOMODA, Motoyoshi, Tokyo 108-8001 (JP); KISHINAMI, Yuichiro, Tokyo 108-8001 (JP); SATOU, Shigeo, Tokyo 108-8001 (JP); MURATA, Yukio, Tokyo 108-8001 (JP); UCHIKAWA, Tatsuya, Tokyo 108-8001 (JP)
(74) Representative: Vossius & Partner
(86) International application number: PCT/JP2011/005061
(87) International publication number: WO 2012/060041

(57) **Abstract**

An oscillation device includes a first oscillator (120), a second oscillator (112), and a control unit (50). The first oscillator (120) includes a first piezoelectric vibrator, and the second oscillator (112) includes a second piezoelectric vibrator. The control unit (50) inputs an audio signal of an audible sound to the first piezoelectric vibrator included in the first oscillator (120), and inputs a modulation signal of a parametric speaker to the second piezoelectric vibrator included in the second oscillator (112).

## Description

### TECHNICAL FIELD

The present invention relates to an oscillation device used as a speaker, and to a portable device.

### BACKGROUND ART

In recent years, demand for portable terminals such as a cellular phone or a lap-top computer has grown. Particularly, thin portable terminals having sound functions, such as a video phone, a movie player, and a hands-free phone function, as commodity values have been developed. During the development thereof, the requirement for a small-sized and high-output electro-acoustic transducer has increased. In electronic devices such as a cellular phone, an electro-dynamic electro-acoustic transducer has been used as an electro-acoustic transducer. The electro-dynamic electro-acoustic transducer is composed of a permanent magnet, a voice coil, and a vibrating membrane. However, the electro-dynamic electro-acoustic transducer has a limitation in a reduction of thickness thereof due to the operation principle and the structure thereof. Consequently, it is expected to use a piezoelectric vibrator as a parametric speaker.

On the other hand, Patent Documents 1, 2, and 3 disclose that a parametric speaker and an electro-dynamic speaker are used in the same acoustic device.

### RELATED DOCUMENT

### PATENT DOCUMENTS

[Patent Document 1] Japanese Unexamined Patent Application Publication No. 2002-027586
[Patent Document 2] Japanese Unexamined Patent Application Publication (Translation of PCT Application) No. 2004-527968
[Patent Document 3] Japanese Unexamined Patent Application Publication No. 2009-010619

### DISCLOSURE OF THE INVENTION

A conductivity-type speaker is thicker than a parametric speaker. For this reason, when an electro-dynamic speaker and a parametric speaker are mounted onto one electronic device, the thickness of an electronic device is determined by the thickness of a conductivity-type speaker. Therefore, when the conductivity-type speaker is used, there is a limitation in a reduction of the thickness of the electronic device. On the other hand, it is essential for a portable device to reduce the thickness thereof in order to improve portability.

An object of the present invention is to provide an oscillation device and a portable device that include both a speaker reproducing an audible sound as it is and a parametric speaker, and are capable of a reduction in thickness.

According to the invention, there is provided an oscillation device including: a first oscillator including a first piezoelectric vibrator; a second oscillator including a second piezoelectric vibrator; and a control unit that inputs an audio signal of an audible sound to the first oscillator, and inputs a modulation signal of a parametric speaker to the second oscillator.

According to the invention, there is provided a portable device including: a first oscillator including a first piezoelectric vibrator; a second oscillator including a second piezoelectric vibrator; and a control unit that inputs an audio signal of an audible sound to the first oscillator, and inputs a modulation signal of a parametric speaker to the second oscillator.

According to the invention, it is possible to achieve a reduction in thickness in an oscillation device including both a speaker reproducing an audible sound as it is and a parametric speaker.

### BRIEF DESCRIPTION OF THE DRAWINGS

The above-mentioned objects, other objects, features and advantages will be made clearer from the preferred embodiments described below, and the following accompanying drawings.

Fig. 1 is a diagram illustrating a configuration of an oscillation device according to a first embodiment.
Fig. 2 is a plan view illustrating a configuration of a portable device having the oscillation device shown in Fig. 1.
Fig. 3 is a plan view illustrating a layout of a second oscillation device.
Fig. 4 is a cross-sectional view illustrating a configuration of a piezoelectric vibrator in the thickness direction.
Fig. 5 is an exploded perspective view illustrating a configuration of a piezoelectric vibrator of an oscillation device according to a second embodiment.
Fig. 6 is a diagram illustrating a configuration of an oscillation device according to a third embodiment.
Fig. 7 is a diagram illustrating a configuration of an oscillation device according to a fourth embodiment.

### DESCRIPTION OF EMBODIMENTS

Hereinafter, the embodiments of the invention will be described with reference to the accompanying drawings. In all the drawings, like elements are referenced by like reference numerals and descriptions thereof will not be repeated.

### (First Embodiment)

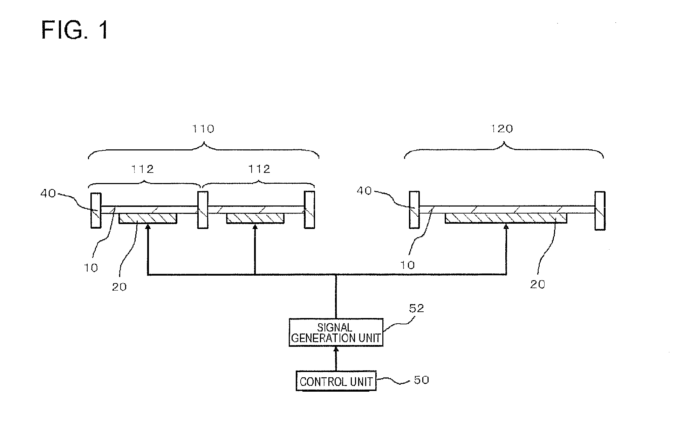

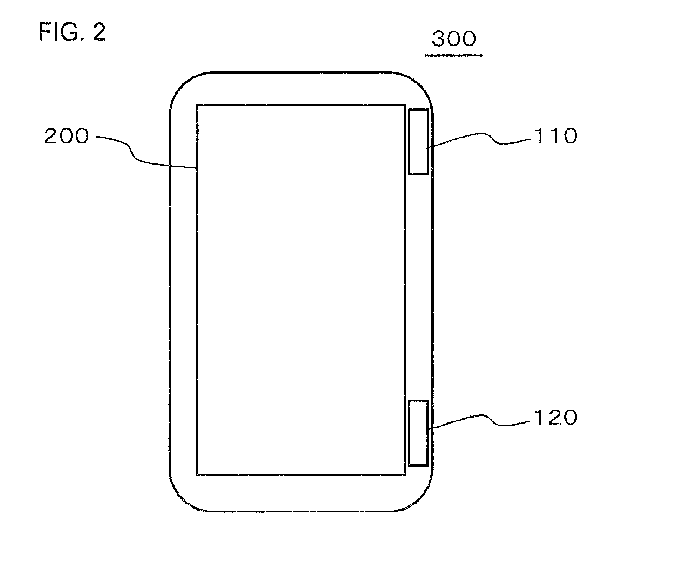

Fig. 1 is a diagram illustrating a configuration of an oscillation device according to a first embodiment. Fig. 2 is a plan view illustrating a configuration of a portable device 300 having the oscillation device shown in Fig. 1. The portable device 300 is, for example, a portable communication terminal or a portable game console. The oscillation device shown in Fig. 1 includes a first oscillator 120, a second oscillator 112, and a control unit 50. The first oscillator 120 includes a first piezoelectric vibrator, and the second oscillator 112 includes a second piezoelectric vibrator. The control unit 50 inputs an audio signal of an audible sound to the first piezoelectric vibrator included in the first oscillator 120, and inputs a modulation signal of a parametric speaker to the second piezoelectric vibrator of the second oscillator 112.

The oscillation device shown in Fig. 1 is used as an audio output source of the portable device 300, for example, as shown in Fig. 2. The first oscillator 120 functions as a speaker that outputs an audible sound, and the second oscillator 112 functions as a parametric speaker 110. The portable device 300 is, for example, a portable communication terminal or a portable acoustic device, and includes a display screen 200. The first oscillator 120 and the parametric speaker 110 are disposed laterally to the display screen 200. Specifically, on a housing of the portable device 300, the first oscillator 120 and the parametric speaker 110 are disposed on the surface on which the display screen is provided, and are located between the display screen and the lateral side of the housing. Since this area of the housing of the portable device 300 is narrow, the planar shapes of the first oscillator 120 and the parametric speaker 110 are rectangular. The long sides of the first oscillator 120 and parametric speaker 110 are directed toward a direction along the edge of the housing of the portable device 300. Meanwhile, the layout of the parametric speaker 110 and the first oscillator 120 is not limited to the example shown in Fig. 2.

As shown in Fig. 1, the parametric speaker 110 includes a plurality of second oscillators 112. In the example shown in this drawing, both the second oscillator 112 and the parametric speaker 110 include a vibration member 10, a piezoelectric vibrator 20, and a supporting member 40.

The piezoelectric vibrator 20 is formed of materials showing a piezoelectric effect, for example, piezoelectric ceramics. The piezoelectric vibrator 20 included in the first oscillator 120 and the piezoelectric vibrator 20 included in the parametric speaker 110 are different from each other in size. Specifically, the piezoelectric vibrator 20 included in the second oscillator 112 is smaller than the piezoelectric vibrator 20 included in the first oscillator 120. This is because the second oscillator 112 oscillates an ultrasonic wave, whereas the first oscillator 120 oscillates an audible sound of which wavelength is longer than that of the ultrasonic wave.

The vibration member 10 is vibrated by a vibration generated from the piezoelectric vibrator 20. In addition, the vibration member 10 adjusts the fundamental resonance frequency of the piezoelectric vibrator 20. The fundamental resonance frequency of a mechanical vibrator depends on load weight and compliance. Since the compliance is a mechanical rigidity of a vibrator, the fundamental resonance frequency of the piezoelectric vibrator 20 can be controlled by controlling the rigidity of the vibration member 10. Meanwhile, it is preferable that the thickness of the vibration member 10 is equal to or more than 5 µm, and is equal to or less than 500 µm. In addition, it is preferable that the longitudinal elasticity modulus of the vibration member 10, which is an index of rigidity, is equal to or more than 1 GPa, and is equal to or less than 500 GPa. When the rigidity of the vibration member 10 is excessively low or excessively high, it is possible that the characteristics and reliability thereof as a mechanical vibrator are damaged. Meanwhile, the material constituting the vibration member 10 is not particularly limited insofar as it is a material, such as metal or resin, having a higher elastic modulus with respect to the piezoelectric vibrator 20 which is formed of a brittle material, but phosphor bronze, stainless steel or the like are preferable from the viewpoint of workability or costs.

The piezoelectric vibrator 20 is configured such that the entire surface thereof facing the vibration member 10 is fixed to the vibration member 10 by an adhesive. Thereby, the entire surface of the piezoelectric vibrator 20 is constrained by the vibration member 10.

In addition, the oscillation device includes a control unit 50 and a signal generation unit 52 as an oscillation circuit. The signal generation unit 52 generates an electrical signal, e.g. a modulation signal in the parametric speaker, which is input to the piezoelectric vibrator 20 of the second oscillator 112. A modulation signal transportation wave is an ultrasonic wave having a frequency of equal to or more than 20 kHz, for example, an ultrasonic wave of 100 kHz. In addition, the signal generation unit 52 generates an audio signal of an audible sound and inputs the signal to the first oscillator 120. The control unit 50 controls the signal generation unit 52 on the basis of audio information which is input from the outside.

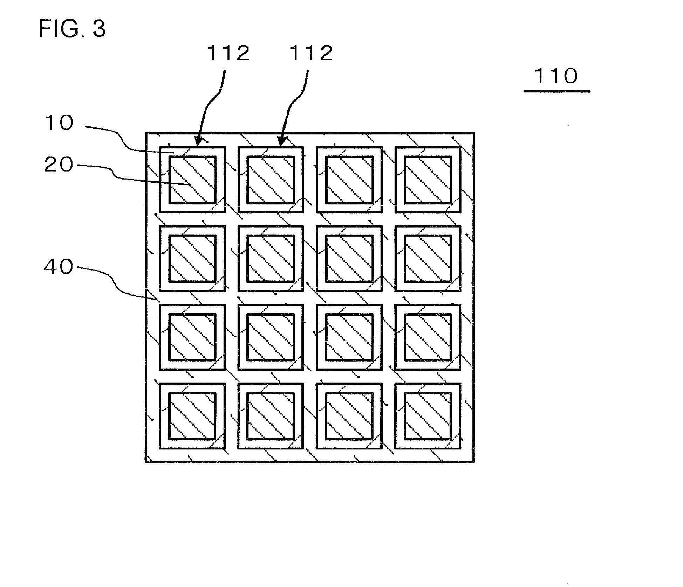

Fig. 3 is a plan view illustrating a layout of the second oscillator 112 included in the parametric speaker 110. In the example shown in this drawing, the supporting member 40 has a lattice shape, and has a plurality of openings which are disposed in an array form. The vibration member 10 and the piezoelectric vibrator 20 constituting the second oscillator 112 are fitted into each of the plurality of openings included in the supporting member 40. The control unit 50 shown in Fig. 1 controls the directivity of the parametric speaker using a phased array method. Specifically, the control unit 50 controls space in which the demodulation of the parametric speaker is performed by regulating a modulation signal which is input to each of the plurality of second oscillators 112. Meanwhile, in the example shown in Fig. 3, the planar shapes of the vibration member 10 and the piezoelectric vibrator 20 are right-angled tetragonal, for example, rectangular. However, the planar shapes of the vibration members 10 and 20 are not limited thereto.

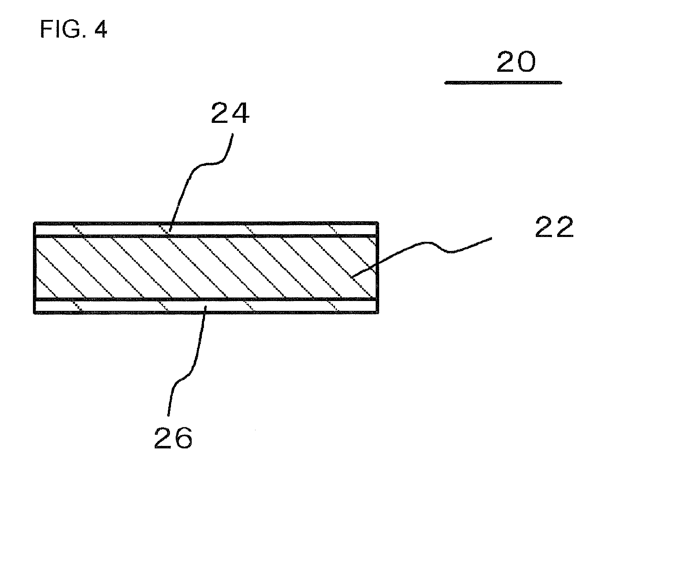

Fig. 4 is a cross-sectional view illustrating a configuration of the piezoelectric vibrator 20 in the thickness direction. The piezoelectric vibrator 20 includes a piezoelectric substance 22, an upper electrode 24, and a lower electrode 26.

The piezoelectric substance 22 is polarized in the thickness direction. The material constituting the piezoelectric substance 22 may be any of an inorganic material and an organic material insofar as it is a material having a piezoelectric effect. However, the material having high electro-mechanical conversion efficiency, e.g. piezoelectric zirconate titanate (PZT) or barium titanate (BaTi0₃), is preferable. The thickness h₁ of the piezoelectric substance 22 is equal to or more than 10 µm, and is equal to or less than 1 mm, for example. When the thickness h₁ is less than 10 µm, the piezoelectric vibrator 20 could be damaged during the manufacturing of the oscillation device. In addition, when the thickness h₁ exceeds 1 mm, the electro-mechanical conversion efficiency is excessively lowered, and thus a sufficiently large vibration cannot be obtained. The reason is that when the thickness of the piezoelectric vibrator 20 increases, the electric field intensity within the piezoelectric vibrator is inversely proportional thereto and thus decreases.

Although the materials constituting the upper electrode 24 and the lower electrode 26 are not particularly limited, for example, silver or silver/palladium can be used. Since silver is used as a versatile electrode material with low-resistance, there is an advantage in a manufacturing process or cost and the like. Since silver/palladium is a low-resistance material excellent in oxidation resistance, there is an advantage from the viewpoint of reliability. In addition, the thickness h₂ of the upper electrode 24 and the lower electrode 26 is not particularly limited, but it is preferable that the thickness h₂ is equal to or more than 1 µm, and is equal to or less than 100 µm. When the thickness h₂ is less than 1 µm, it is difficult to uniformly form the upper electrode 24 and the lower electrode 26. As a result, the electro-mechanical conversion efficiency could decrease. In addition, when the film thicknesses of the upper electrode 24 and the lower electrode 26 exceed 100 µm, the upper electrode 24 and the lower electrode 26 serve as constraint surfaces with respect to the piezoelectric substance 22, and thus the energy conversion efficiency could be caused to decrease.

Next, the operations and effects of the embodiment will be described. According to the embodiment, the oscillation device includes the parametric speaker 110 and the first oscillator 120. The first oscillator 120 is a speaker that outputs an audible sound as it is. Both the parametric speaker 110 and the first oscillator 120 output an audio through the vibration of the piezoelectric vibrator 20. For this reason, since an electro-dynamic speaker is not required to be used, it is possible to reduce the thickness of the oscillation device. Therefore, since the thickness of the portable device 300 can be reduced, the portability of the portable device 300 is also improved.

In addition, since the parametric speaker 110 and the first oscillator 120 can be controlled using the same control unit 50 and signal generation unit 52, it is possible to simplify a control circuit system of the oscillation device.

### (Second Embodiment)

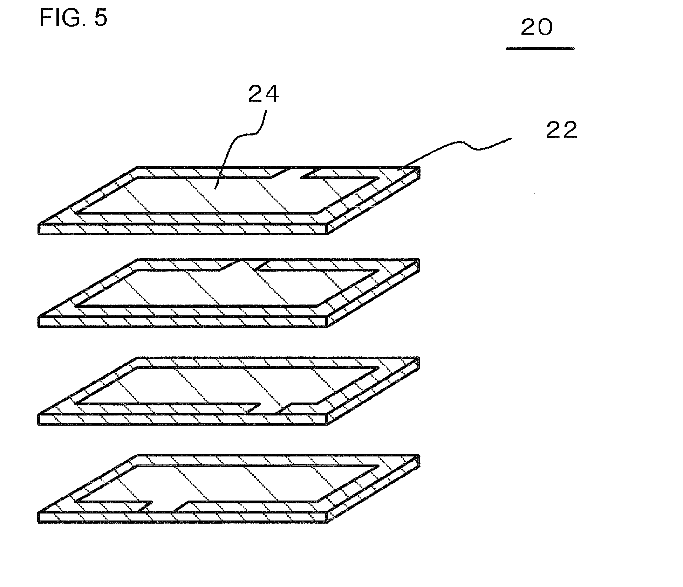

Fig. 5 is an exploded perspective view illustrating a configuration of the piezoelectric vibrator 20 of an oscillation device according to a second embodiment. The oscillation device according to the embodiment has the same configuration as that of the oscillation device according to the first embodiment, except that the piezoelectric vibrator 20 has a structure in which a plurality of piezoelectric substances 22 and electrodes 24 are alternately laminated. The polarization directions of the piezoelectric substances 22 are switched for each layer, and are alternating with each other.

In the embodiment, the same effect as that of the first embodiment can also be obtained. In addition, since the piezoelectric vibrator 20 has a structure in which a plurality of piezoelectric substances 22 and electrodes 24 are alternately laminated, the amount of expansion and contraction of the piezoelectric vibrator 20 increases. Therefore, it is possible to increase an output of the oscillation device.

### (Third Embodiment)

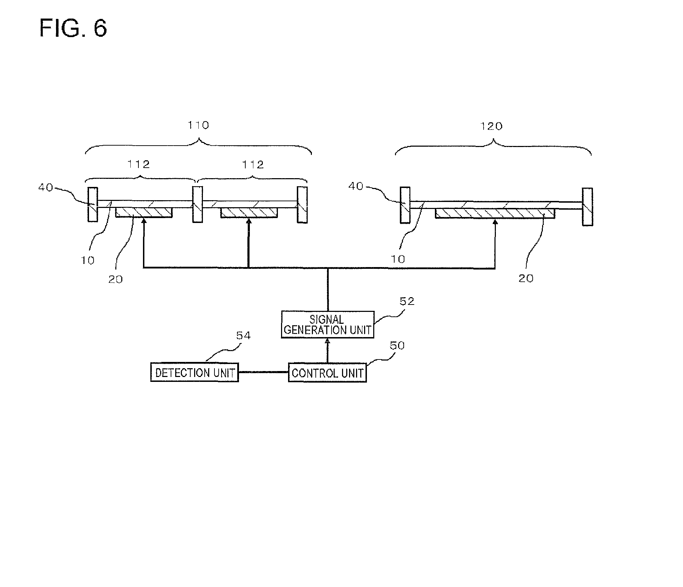

Fig. 6 is a diagram illustrating a configuration of an oscillation device according to a third embodiment, and corresponds to Fig. 1 in the first embodiment. The oscillation device according to the embodiment is the same as that of the first embodiment except for the following points.

First, the control unit 50 can output an ultrasonic wave for an ultrasonic wave sensor from the second oscillator 112 of the parametric speaker 110, on the basis of an input of a user of the portable device 300. The oscillation device includes a detection unit 54. The detection unit 54 detects an ultrasonic wave having the same frequency as that of the ultrasonic wave for an ultrasonic wave sensor which is output from the second oscillator 112. The control unit 50 detects an object, e.g. an obstacle located in the vicinity of the portable device 300, on the basis of the intensity of the ultrasonic wave detected by the detection unit 54, or on the basis of the time between when a billing information storage unit 112 oscillates an ultrasonic wave and when the detection unit 54 detects the ultrasonic wave, and calculates a distance from the portable device 300 to the object.

In the embodiment, the same effect as that of the first embodiment can also be obtained. In addition, it is possible to add a sensor function to the portable device 300 by merely adding the detection unit 54.

### (Fourth Embodiment)

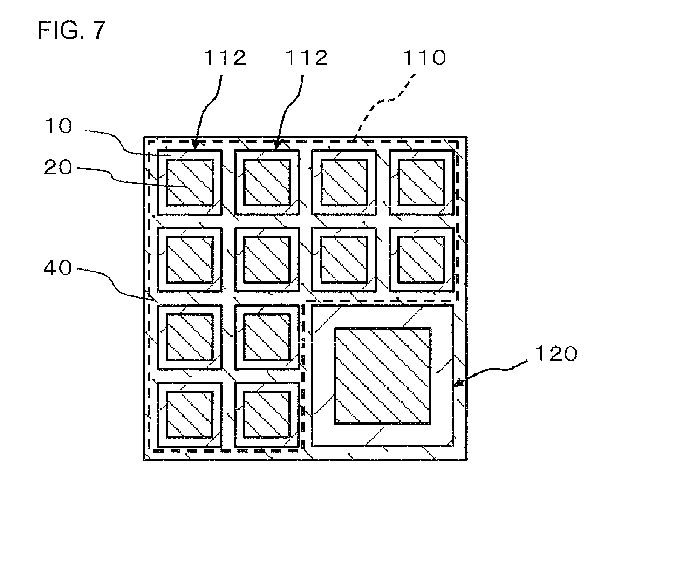

Fig. 7 is a diagram illustrating a configuration of an oscillation device according to a fourth embodiment, and corresponds to Fig. 3 in the first embodiment. The oscillation device according to the embodiment is the same as that of the first embodiment, except that the parametric speaker 110 and the first oscillator 120 are formed using one supporting member 40.

Specifically, the supporting member 40 is provided with a first opening which is relatively large, and a plurality of second openings smaller than the first opening. The vibration member 10 and the piezoelectric vibrator 20 that serve as the first oscillator 120 are fitted into the first opening, and the vibration member 10 and the piezoelectric vibrator 20 that serve as the second oscillator 112 are fitted into the second opening.

In the embodiment, the same effect as that of the first embodiment can also be obtained. In addition, since the parametric speaker 110 and the first oscillator 120 can be formed as one module, the oscillation device is incorporated more easily into the portable device 300.

As described above, although the embodiments of the invention have been set forth with reference to the drawings, these are merely illustrative of the invention, and various configurations other than those stated above can be adopted.

The application claims priority to Japanese Patent Application No. 2010-245665 filed on November 1, 2010, the content of which is incorporated herein by reference in its entirety.

## Claims

1. An oscillation device comprising:
a first oscillator including a first piezoelectric vibrator;
a second oscillator including a second piezoelectric vibrator; and
a control unit that inputs an audio signal of an audible sound to the first oscillator, and inputs a modulation signal of a parametric speaker to the second oscillator.

2. The oscillation device according to claim 1, wherein a plurality of the second oscillator are included.

3. The oscillation device according to claim 1 or 2, wherein the first piezoelectric vibrator is different from the second piezoelectric vibrator in size.

4. The oscillation device according to any one of claims 1 to 3, further comprising a supporting member having a plurality of openings,
wherein the first piezoelectric vibrator and the second piezoelectric vibrator are fitted into the different openings of the supporting member.

5. The oscillation device according to any one of claims 1 to 4, further comprising a detection unit that detects an ultrasonic wave having the same frequency as that of an ultrasonic wave oscillated from the second oscillator,
wherein the control unit calculates a distance from the oscillation device to an object on the basis of the ultrasonic wave detected by the detection unit.

6. A portable device comprising:
a first oscillator including a first piezoelectric vibrator;
a second oscillator including a second piezoelectric vibrator; and
a control unit that inputs an audio signal of an audible sound to the first oscillator, and inputs a modulation signal of a parametric speaker to the second oscillator.
